# EUROPEAN PATENT APPLICATION

(11) **EP 4 657 223 A1**
(43) Date of publication of application: **03.12.2025**
(21) Application number: 24747288.9
(22) Date of filing: 23.01.2024
(51) Int. Cl.: G06F 3/04815, G06T 19/00, G09B 9/00, G09B 19/00

(54) **VIRTUAL ENVIRONMENT PROVISION DEVICE, METHOD, AND PROGRAM**

(30) Priority: 27.01.2023 JP 2023010849
(71) Applicant: Hitachi Systems, Ltd., Tokyo 141-0032 (JP)
(72) Inventor: ROJAS FERRER, Cesar Daniel, Tokyo 100-8280 (JP); FUJIWARA, Takayuki, Tokyo 100-8280 (JP); KABATA, Ryoichi, Tokyo 141-0032 (JP); KATSUMATA, Daisuke, Tokyo 141-0032 (JP); NARITA, Yoshihito, Tokyo 141-0032 (JP); KIKUCHI, Katsuro, Tokyo 141-0032 (JP)
(74) Representative: MERH-IP Matias Erny Reichl Hoffmann Patentanwälte PartG mbB
(86) International application number: PCT/JP2024/001790
(87) International publication number: WO 2024/157961

(57) **Abstract**

An object of the invention is to enable appropriate placement of an object operated by a user in a situation where there are an object moved by the user and an object that does not move in a virtual environment. In a virtual environment provision apparatus that controls placement of a virtual object in a three-dimensional virtual environment, upon detecting that the user performs an operation of releasing an interactive object in a proximity determination bounding box of a target object, the control unit places the interactive object at a storage location of the target object such that an exclusive bounding box of the interactive object and an exclusive bounding box of another object do not overlap each other in the virtual environment.

## Description

### Technical Field

The present disclosure relates to a technique for providing a virtual environment where a user can operate an object.

### Background Art

In order to implement a virtual environment where a user can operate an object, it is important to place the object operated by the user at an appropriate position.

In PTL 1, in a virtual 3D space, when a first object is moved from a first position to a second position according to a request of a user, a pixel distance in a screen space between a first plane of a first bounding box of the first object and a second plane of a second bounding box of a second object is calculated, and when the pixel distance is equal to or less than an error value, the first object is moved and placed to align the first plane of the first bounding box with the second plane.

### Citation List

### Patent Literature

PTL 1: US11204679B1

### Summary of Invention

### Technical Problem

In an immersive industrial training simulation by a virtual environment, a user operates various tools, which are 3D objects, to perform training for a task or the like. The user picks up a certain tool from the various tools placed on a table, performs the task using the tool, and returns the tool to the table in the virtual environment. In order to maintain a sense of immersion for the user, it is important that, for example, when the user returns the tool to the table, the tool is returned to an appropriate position without causing any sense of discomfort, or that the user can easily pick up the tool again.

Processing disclosed in PTL 1 is processing for automatically adjusting placement of a certain object based on a positional relationship with another object, and there is no difference in handling of both objects. Therefore, the processing in PTL 1 is not suitable for simulating a situation where there are a portable item such as a tool and a fixed item such as a table.

An object of the present invention is to provide a technique that enables appropriate placement of an object operated by a user in a situation where there are an object moved by the user and an object that does not move in a virtual environment.

### Solution to Problem

A virtual environment provision apparatus according to one aspect of the disclosure is a virtual environment provision apparatus that controls placement of a virtual object in a three-dimensional virtual environment, the virtual environment provision apparatus including: a storage unit; a control unit; a sensor unit; and a display unit, in which the storage unit stores a database, the database defining an interactive object movable by a user in a virtual environment, a target object serving as a placement destination for the interactive object, a storage location where the interactive object is placed on the target object, exclusive bounding boxes representing virtual boundaries of the interactive object and the target object that do not allow overlapping with each other, and a proximity determination bounding box for determining that the interactive object is in proximity to the target object, the sensor unit acquires operation information on an operation performed on an object by the user, upon detecting that the user performs an operation of releasing the interactive object in the proximity determination bounding box of the target object based on the operation information, the control unit places the interactive object at the storage location of the target object such that an exclusive bounding box of the interactive object and an exclusive bounding box of another object do not overlap each other in the virtual environment, and the display unit displays the target object and the interactive object in the virtual environment.

### Advantageous Effects of Invention

According to one aspect of the disclosure, it is possible to appropriately place an object operated by a user in a situation where there are an object moved by the user and an object that does not move in a virtual environment.

### Brief Description of Drawings

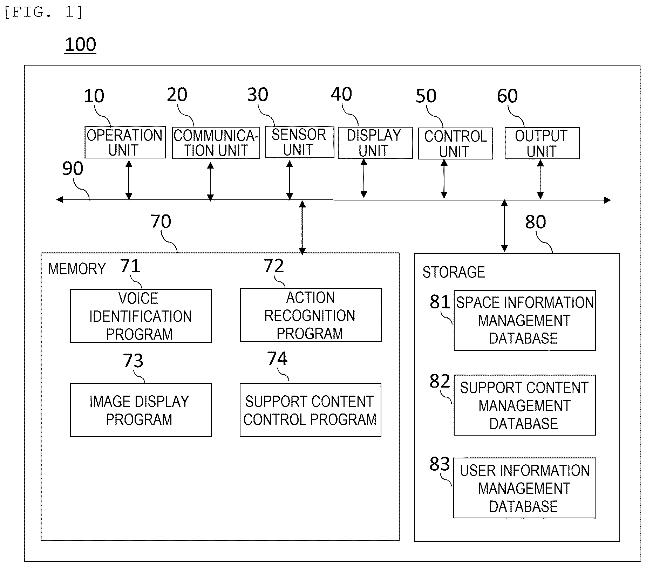

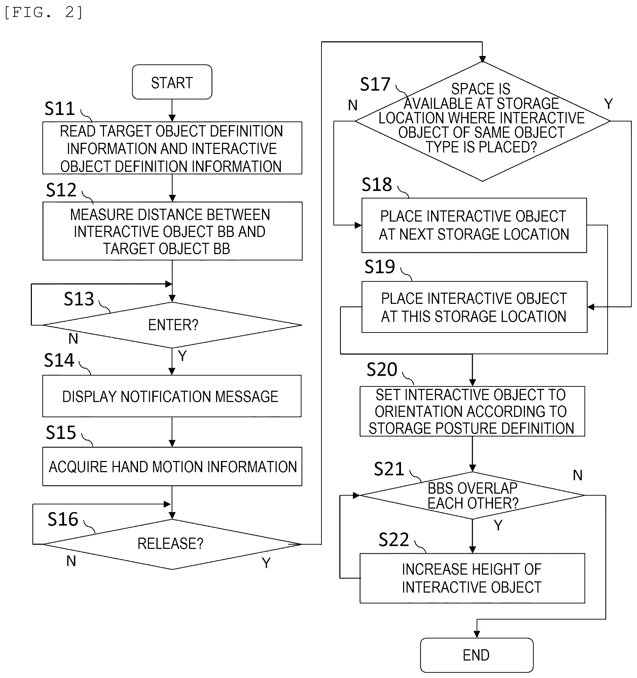

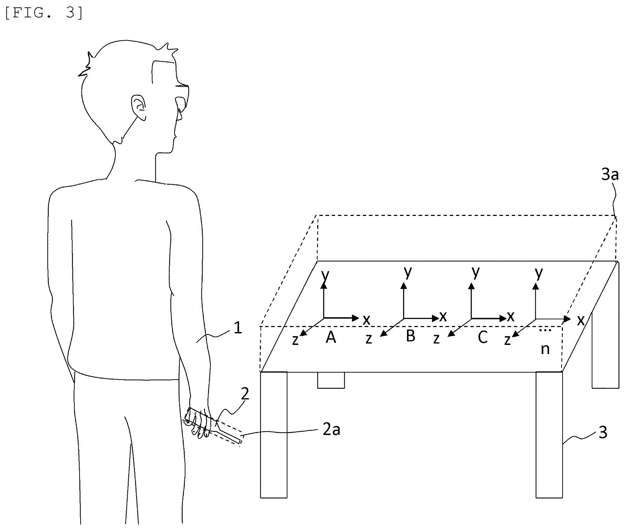

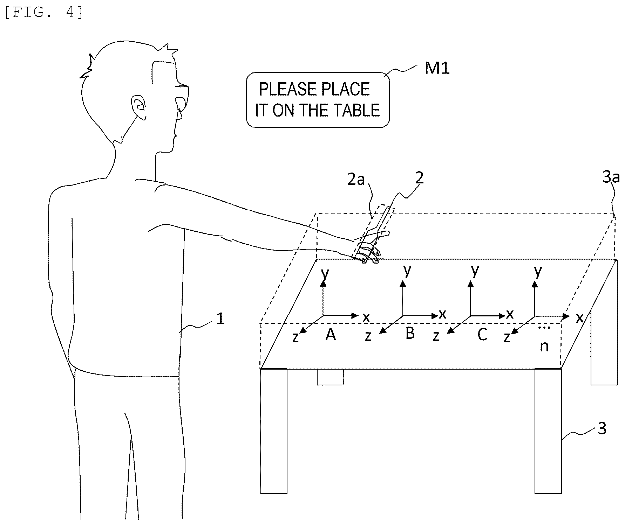

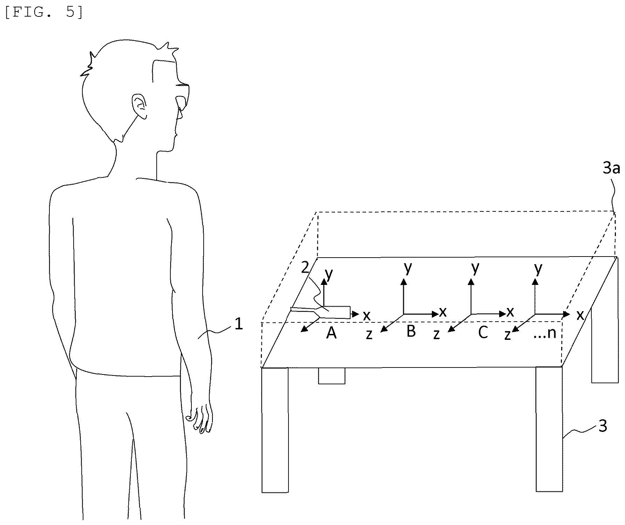

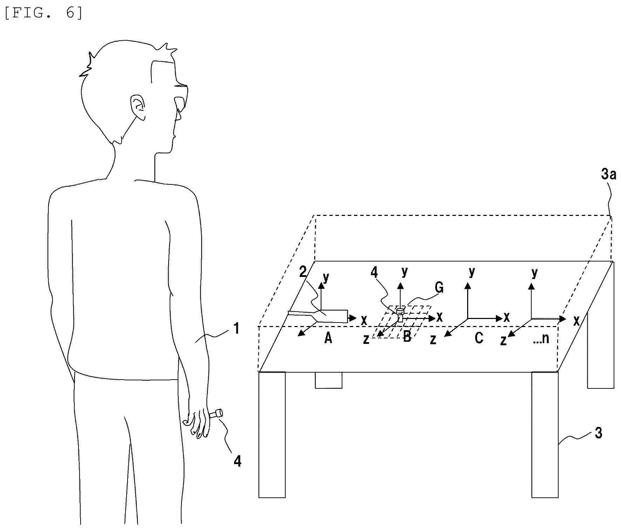

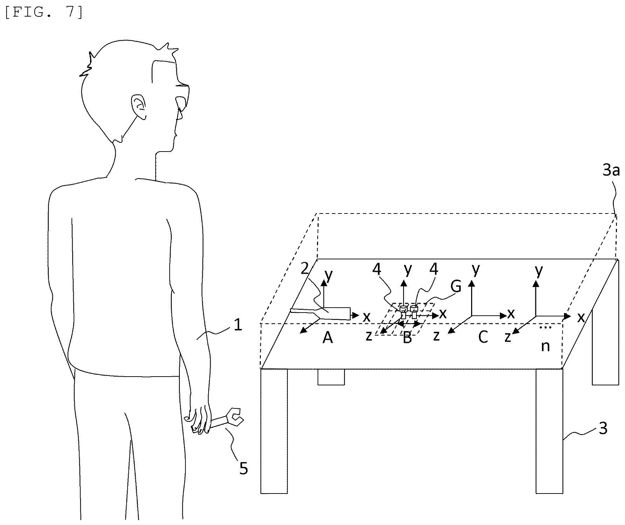

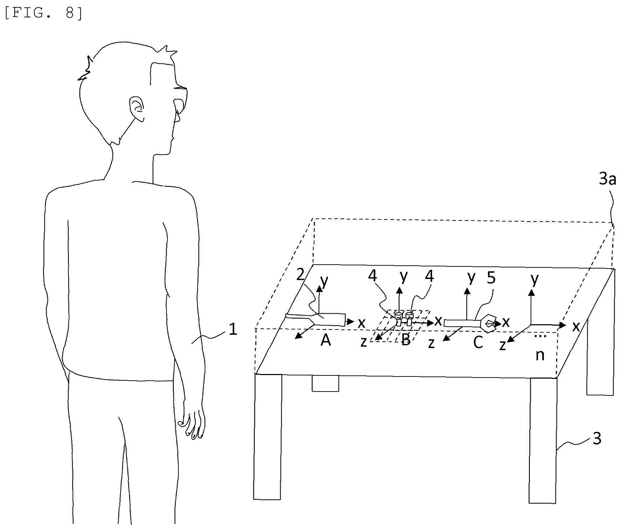

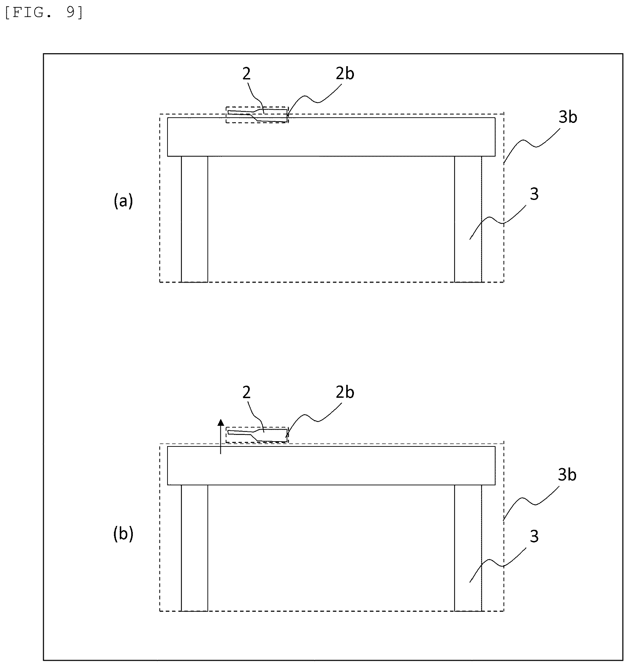

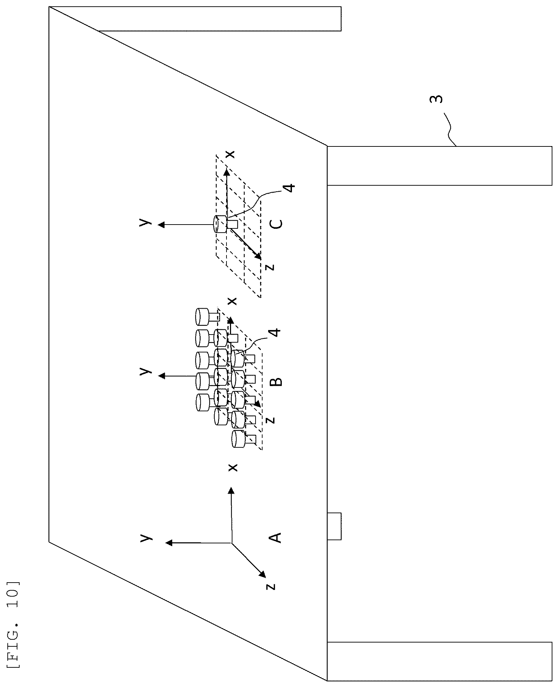

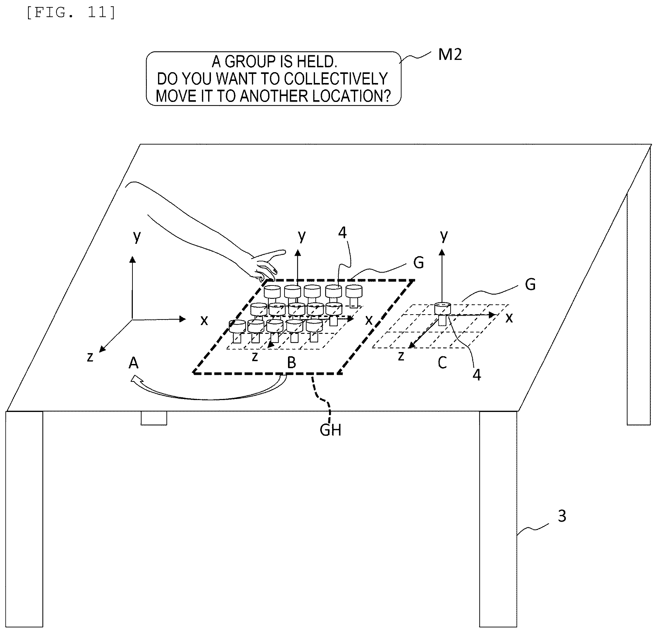

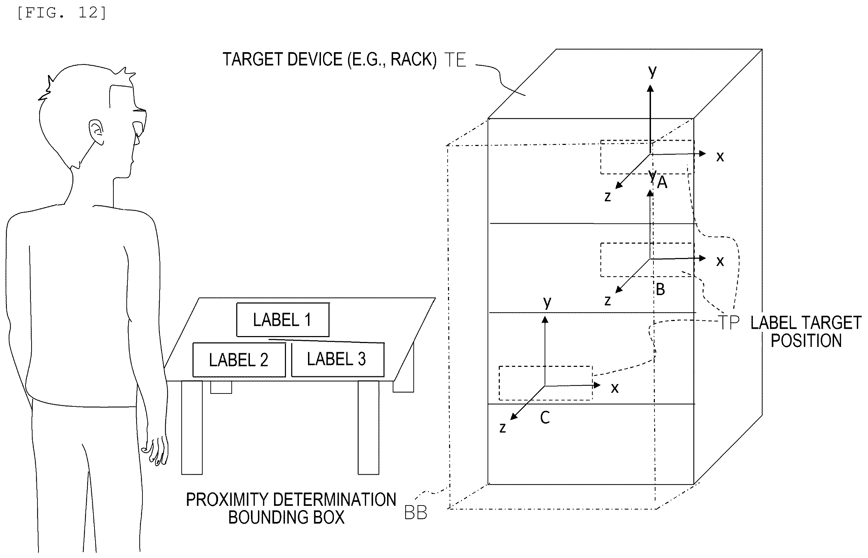

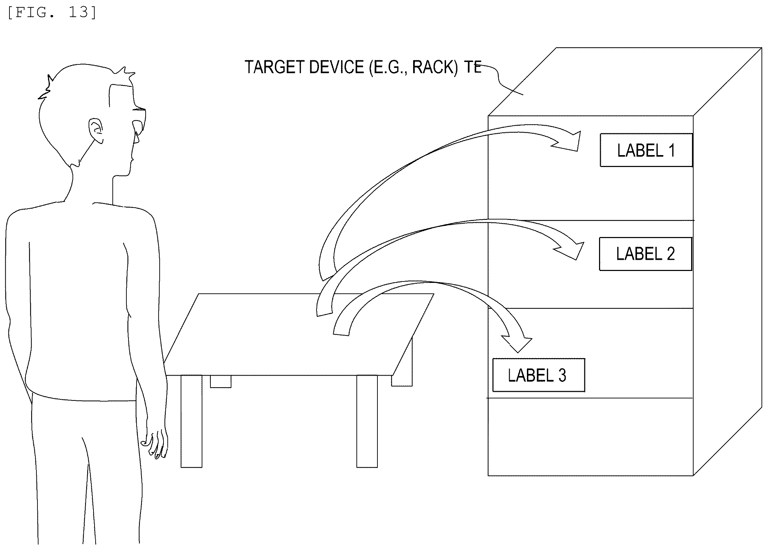

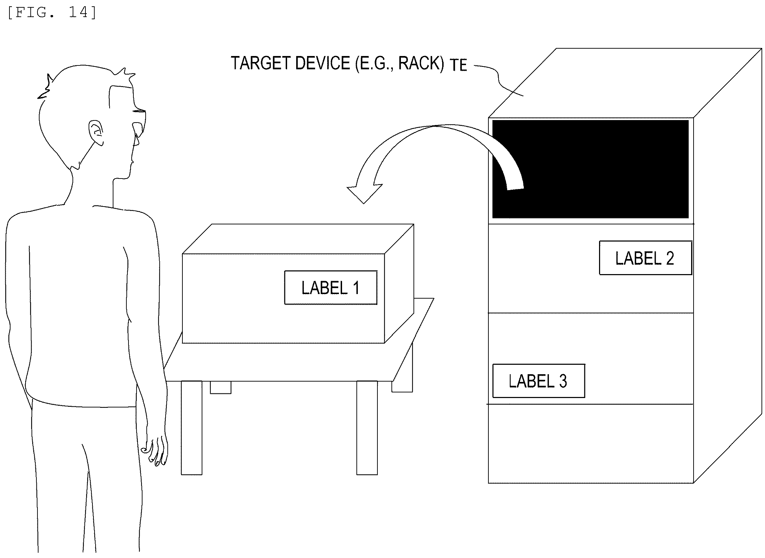

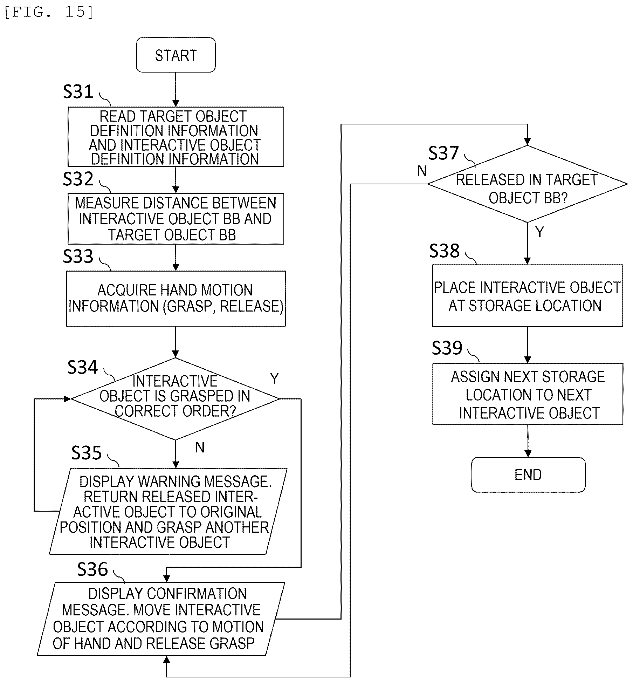

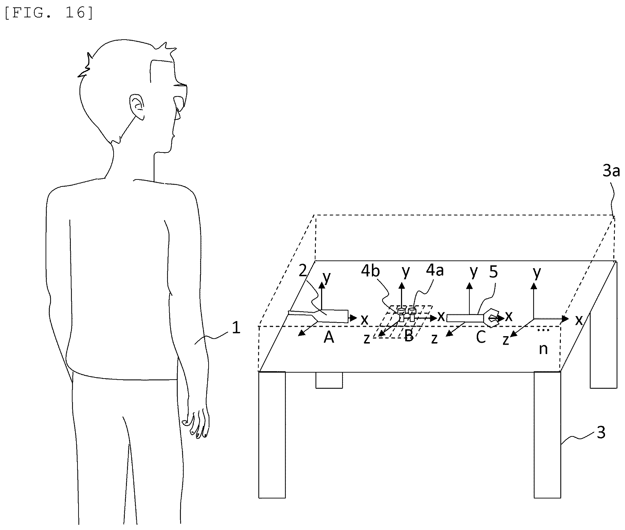

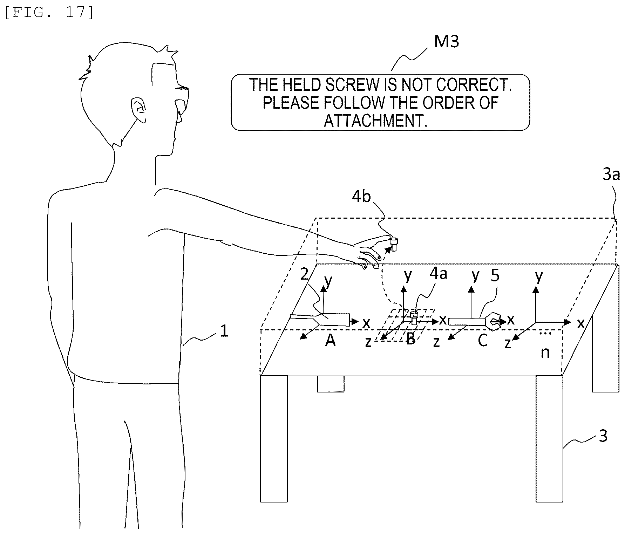

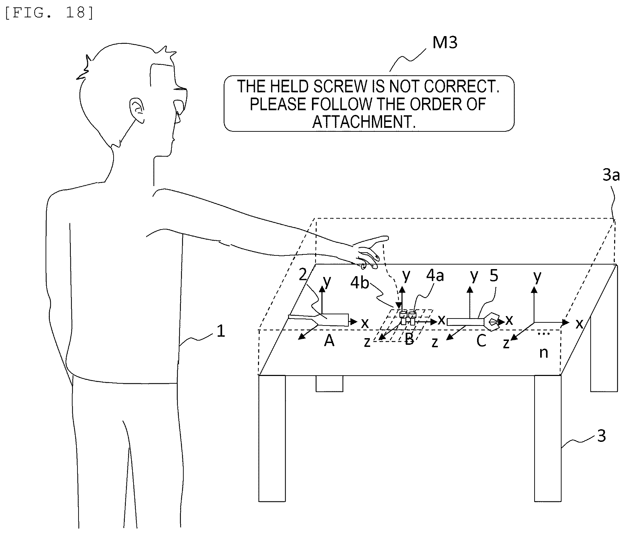

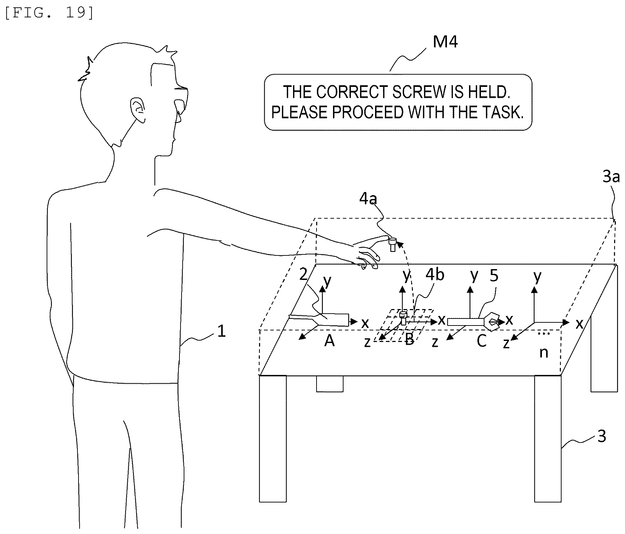

[FIG. 1] FIG. 1 is a block diagram showing an example of a virtual environment provision apparatus according to an embodiment. [FIG. 2] FIG. 2 is a flowchart showing an example of an operation performed by the virtual environment provision apparatus according to the embodiment. [FIG. 3] FIG. 3 is a conceptual diagram showing a state in which a user holds an interactive object in a virtual environment displayed on a display unit. [FIG. 4] FIG. 4 is a diagram showing a state in which an exclusive BB of a driver that is the interactive object enters a proximity determination BB of a table that is a target object. [FIG. 5] FIG. 5 is a diagram showing a state in which the driver released from a hand of the user is placed at a storage location A on the table. [FIG. 6] FIG. 6 is a diagram showing a case where a storage location B on the table that is the target object is defined, in definition information on a screw that is the interactive object, as a storage location for the screw. [FIG. 7] FIG. 7 is a diagram showing a state in which a second screw is placed adjacent to a grid cell of a restricted area of the storage location B where the first screw is placed as shown in FIG. 6. [FIG. 8] FIG. 8 is a diagram showing a case where a storage location C on the table that is the target object is defined, in definition information on a wrench that is the interactive object, as a storage location for the wrench. [FIG. 9] FIG. 9 is a diagram showing a state in which the driver that is the interactive object is placed at the storage location on the table that is the target object. [FIG. 10] FIG. 10 is a diagram showing a state in which a total of 15 interactive objects (screws) are placed in the restricted area set at the storage location B of the table. [FIG. 11] FIG. 11 is a diagram showing a state in which a group highlight around the restricted area and a text message are displayed to notify the user that a group is held. [FIG. 12] FIG. 12 is a diagram showing that a label, which is the interactive object, is placed on the table and a label target position is set at each shelf of a rack, which is a target device, in the virtual environment. [FIG. 13] FIG. 13 is a diagram showing a state in which the label is placed at the label target position of each shelf. [FIG. 14] FIG. 14 is a diagram showing a state in which the user pulls out a certain shelf from the rack and places the shelf on the table. [FIG. 15] FIG. 15 is a flowchart showing another example of the operation performed by the virtual environment provision apparatus according to the embodiment. [FIG. 16] FIG. 16 is a conceptual diagram showing the virtual environment displayed on the display unit. [FIG. 17] FIG. 17 is a diagram showing a state in which a warning message is displayed on the display unit. [FIG. 18] FIG. 18 is a diagram showing a state in which the interactive object held by the user is returned to a previous position before it was held by the user upon receiving the warning message. [FIG. 19] FIG. 19 is a diagram showing a state in which a confirmation message is displayed on the display unit.

### Description of Embodiments

Hereinafter, an embodiment of the invention will be described with reference to the drawings.

FIG. 1 is a block diagram showing an example of a virtual environment provision apparatus according to the embodiment. As shown in FIG. 1, a virtual environment provision apparatus 100 according to the embodiment includes an operation unit 10, a communication unit 20, a sensor unit 30, a display unit 40, a control unit 50, an output unit 60, a memory 70, and a storage 80. These units are connected to one another via a bus 90.

The operation unit 10 is an input interface that receives an input for a user to operate the virtual environment provision apparatus 100, and can include, for example, a keyboard, a pointing device such as a mouse or a joystick, a touch panel, a voice microphone, or any combination thereof.

The communication unit 20 is a communication interface for communicating with an external apparatus, a cloud server, or the like (not shown) via a communication network such as the Internet, an intranet, a wireless local area network (LAN), or a wide area network (WAN).

The sensor unit 30 is a sensor that mainly detects a position of a hand and a motion of a finger of the user, and can include, for example, a camera that captures a two-dimensional image (for example, an RGB image), a depth sensor that generates a depth image, or a combination thereof. Examples of the motion of the finger detected by the sensor unit 30 include "hand is open", "motion of holding object with two fingers", and "motion of holding object with five fingers". As an example, the sensor unit 30 is provided at a head-mounted display (HMD) that is the display unit 40 to be described later, and detects the position of the hand and the motion of the finger of the user, who wears the HMD on a head, in front of the user. In this way, the sensor unit 30 acquires operation information on an operation performed on an object by the user.

The display unit 40 is a display device that displays an image generated by the control unit 50 and provides visual information to the user, and includes, for example, a head-mounted display (HMD). The HMD is configured to display a three-dimensional virtual environment generated by the control unit 50 of the virtual environment provision apparatus 100 in the form of left-eye and right-eye two-dimensional images presented to left and right eyes of the user with parallax.

The control unit 50 includes a processor such as one or two or more central processing units (CPU) that control the entire virtual environment provision apparatus 100 or one or two or more graphics processing units (GPU) that perform image processing. By executing various programs stored and loaded in the memory 70 to be described later, the control unit 50 can implement various functions described in the programs.

The output unit 60 includes, for example, a speaker that emits sound. The output unit 60 provides voice information to the user by emitting sound generated by the control unit 50.

The memory 70 includes a transitory or non-transitory storage medium such as a random access memory (RAM) or a read only memory (ROM), and stores a program for the control unit 50, which includes the processor, to implement various functions. The memory 70 at least temporarily stores information acquired by the operation unit 10, the communication unit 20, and the sensor unit 30, and various types of data (including intermediate generated data) generated by a processing operation by the control unit 50.

As shown in FIG. 1, the memory 70 stores a voice identification program 71, an action recognition program 72, an image display program 73, and a support content control program 74 as examples of the programs for implementing the functions according to the embodiment. Processing executed by the virtual environment provision apparatus 100 is described in advance in each of these programs. The control unit 50 reads each program from the memory 70 and executes the program, thereby operating to implement, in particular, processing performed by the virtual environment provision apparatus 100 as described with reference to FIGS. 2 and 15 and functions thereof.

The voice identification program 71 is a program that causes the control unit 50 to execute processing of identifying voice input by the user via the voice microphone constituting the operation unit 10 and specifying information input by the voice. By the voice identification program 71, the user can perform an input for operating the virtual environment provision apparatus 100 by voice.

The action recognition program 72 is a program that causes the control unit 50 to execute processing of recognizing the position of the hand and the motion of the finger of the user in a real space detected by the sensor unit 30. By the action recognition program 72, the position of the hand and the motion of the finger of the user in the RGB image and/or the depth image acquired by the sensor unit 30 are recognized using, for example, any image recognition technology based on a feature point of the finger, or a trained model trained by machine learning using a large number of training image data related to the position and an orientation of the hand and the motion of the finger.

The image display program 73 is a program that causes the control unit 50 to execute processing of generating an image for displaying the visual information to be provided to the user on the display unit 40 and displaying the image on the display unit 40. The visual information to be provided to the user is, for example, visual information for reproducing the three-dimensional virtual environment including an interactive object (as an example, a virtual object representing various movable tools or components), which is a virtual object movable by the user in the virtual environment, and a target object (as an example, a virtual object representing a non-movable table), which is a virtual object serving as a placement destination for the interactive object in the virtual environment, the image for displaying the visual information on the display unit 40 is generated in the form of the left-eye and right-eye two-dimensional images each presented with parallax to the left and right eyes of the user who wears the HMD as the display unit 40 on the head as described above, and is displayed on the display unit 40.

The support content control program 74 is a program that causes the control unit 50 to execute processing of controlling support contents of various tasks provided by the virtual environment provision apparatus 100 as described with reference to FIGS. 2 and 15. The support content control program 74 executes the support contents according to scenarios of various types of task training defined in each support content stored in a support content management database 82 of the storage 80 to be described later. The task scenarios include, for example, task training of placing various tools or components at predetermined placement positions on the table in a predetermined order, and task training of attaching a label to each drawer of a rack including a plurality of drawers, taking out a drawer to which a predetermined label is attached from the rack, and placing the drawer on the table.

The support content control program 74 further includes processing of grasping and moving the interactive object displayed in the virtual environment or releasing and placing the interactive object on the target object according to the position of the hand and the motion of the finger of the user recognized by the action recognition program 72. The support content control program 74 also performs, as processing for advancing a scenario of each support content, processing of determining interference between interactive objects and interference between the interactive object and the target object in the virtual environment, and processing of presenting a message to the user when an operation on the interactive object by the user in the virtual environment is performed following the scenario of the support content or when the operation deviates from the scenario. The presentation of the message is executed by displaying text or an image on the display unit 40 or emitting voice from the speaker of the output unit 60.

The storage 80 includes a storage device that can non-temporarily retain stored information even in an unpowered state, such as a magnetic storage device such as a hard disk drive

(HDD) or a solid state drive (SSD), an optical storage device, or a magneto-optical storage device. As shown in FIG. 1, the storage 80 stores a space information management database 81, the support content management database 82, and a user information management database 83 as databases for storing data used in the embodiment.

The space information management database 81 stores definition information on various interactive objects and target objects presented in the virtual environment. Definition information on the interactive object includes an interactive object type indicating an attribute of the interactive object movable by the user in the virtual environment, an exclusive bounding box indicating a virtual boundary that does not allow overlapping with another interactive object and the target object, and a storage posture when the interactive object is placed on the target object. Definition information on the target object includes a target object type indicating an attribute of the target object that is the placement destination for the interactive object, a storage location where the interactive object on the target object is placed, an exclusive bounding box indicating a virtual boundary that does not allow overlapping with the interactive object and another target object, and a proximity determination bounding box for determining that the interactive object is in proximity to the target object. A detailed example of such definition information will be described later in description of an operation by the virtual environment provision apparatus 100.

The support content management database 82 stores support contents of various tasks executed by the support content control program 74. The user can select a support content to be executed by the support content control program 74 from a plurality of support contents stored in the support content management database 82 via the operation unit 10 of the virtual environment provision apparatus 100. Each support content stored in the support content management database 82 includes support content management information necessary for advancing the task training scenario of each support content. As an example, the support content management information includes information on types of the interactive object and the target object displayed in the virtual environment according to the task training scenario, initial display positions thereof in the virtual environment, an order in which a plurality of interactive objects are moved, a position of a placement destination to which each interactive object is to be moved and a placement posture, and a message to be presented to the user according to a user operation input to the interactive object.

The user information management database 83 stores information on each user who uses the virtual environment provision apparatus 100. The information on the user includes user identification information and information on an executed support content, an execution date and time of the support content, a training result of the support content, and the like.

Next, the operation by the virtual environment provision apparatus 100 of the embodiment will be described by showing task training of several support contents as an example.

### (First Task Training Scenario)

A first task training scenario is a scenario related to training for a task of placing various tools and components as the interactive objects on the table that is the target object (hereinafter, also referred to as "first task training"). When the user operates the operation unit 10 of the virtual environment provision apparatus 100 and selects the first task training as the support content to be executed from the plurality of support contents stored in the support content management database 82, the support content related to the first task training is started in the virtual environment provision apparatus 100.

FIG. 2 is a flowchart showing an example of the operation performed by the virtual environment provision apparatus 100 according to the embodiment.

When the support content related to the first task training is started in the virtual environment provision apparatus 100, the control unit 50 reads the definition information on the interactive object and the target object related to the support content of the first task training from the space information management database 81 (step S11).

The definition information to be read from the space information management database 81 is specified by the selected support content. In step S11, as an example, the control unit 50 reads, from the space information management database 81, definition information on a driver (screwdriver), a screw, and a wrench that are the interactive objects used in the support content of the first task training, and reads, from the space information management database 81, definition information on the table that is the target object used in the support content of the first task training.

The control unit 50 places each interactive object and the target object read from the space information management database 81 in a three-dimensional virtual environment, and displays the virtual environment on the display unit 40. Initial placement positions of these objects in the virtual environment are determined by, for example, the support content control program 74. The position of the hand and the motion of the finger of the user in the real space of the user are detected by the sensor unit 30 and are further recognized by the action recognition program 72 executed by the control unit 50. When the user holds and moves the interactive object in the virtual environment displayed on the display unit 40, the interactive object is moved in the virtual environment by the support content control program 74 executed by the control unit 50 according to the motion of the hand of the user.

FIG. 3 is a conceptual diagram showing a state in which the user holds the interactive object in the virtual environment displayed on the display unit 40. In the figure, although a user 1 holding a driver 2 as the interactive object in the virtual environment and a table 5 where the driver 2 is stored and placed are shown, the user 1 is not displayed in the virtual environment displayed on the display unit 40. In the virtual environment, a virtual object representing a hand of the user 1 may be displayed according to a motion of the hand of the user in the real space recognized by the action recognition program 72.

An exclusive bounding box (hereinafter, also referred to as an "exclusive BB") 2a representing a virtual boundary is set around the driver 2 that is the interactive object, according to definition information defined for the interactive object and stored in the space information management database 81.

A proximity determination bounding box (hereinafter, also referred to as a "proximity determination BB") 3a for determining that the interactive object is in proximity to the target object is set above an upper surface of the table 3 that is the target object. Although not shown in FIG. 3, an exclusive bounding box representing a virtual boundary that does not allow overlapping with other interactive objects and target objects is also set around the table 3. Further, storage locations A, B, C, ..., n where the interactive objects are placed are set at the upper surface of the table 3 that is the target object.

Next, in step S12, the control unit 50 measures a positional relationship between the exclusive bounding box of the interactive object and the proximity determination bounding box of the target object in the virtual environment. The measurement of the positional relationship may be performed continuously or may be performed intermittently at a predetermined time interval (for example, an interval of 1 second). In the example shown in FIG. 3, a positional relationship between a position of the driver 2 and the proximity determination BB 3a set above the upper surface of the table 3 is measured.

Next, in step S13, the control unit 50 determines whether the interactive object in the virtual environment enters the proximity determination bounding box of the target object based on the positional relationship measured in step S12. Wherein, it is determined whether the interactive object enters the proximity determination bounding box of the target object based on the positional relationship between the bounding boxes, but the determination method is not particularly limited. As another method, it may be determined whether the interactive object enters the proximity determination bounding box of the target object based on a positional relationship between a position of a representative portion of the interactive object and the proximity determination bounding box of the target object. In this case, a centroid position of the interactive object may be used as the position of the representative portion of the interactive object.

In step S13, when the control unit 50 determines that the interactive object enters the proximity determination bounding box of the target object (Y), the processing proceeds to step S14. On the other hand, when it is determined that the interactive object does not enter the proximity determination bounding box of the target object (N), the control unit 50 repeatedly executes the determination processing of step S13 until it is determined that the exclusive bounding box of the interactive object enters the proximity determination bounding box of the target object.

As shown in FIG. 4, when the exclusive BB 2a of the driver 2 that is the interactive object enters the proximity determination BB 3a of the table 3 that is the target object, the control unit 50 displays a notification message M1 on the display unit 40 in step S14. In the example shown in FIG. 4, the notification message M1 is a text message describing "please place it on the table" that prompts the user to place, on the table 3, the driver 2 grasped and moved to above the table 3 in the virtual environment. In addition to displaying such a notification message M1, the control unit 50 may cause the speaker of the output unit 60 to output voice reading the text. Accordingly, it is possible to notify the user that the interactive object can be placed on the target object, and support the operation performed by the user.

Next, in step S15, the control unit 50 acquires, by the action recognition program 72 executed by the control unit 50, information on the position of the hand and the motion of the finger of the user in the real space detected by the sensor unit 30. In step S15, in particular, information on a gesture of the hand of the user (for example, a state in which five fingers are closed, a state in which two fingers are closed, or a state in which five fingers are opened in a "paper" shape) is acquired.

Next, in step S16, the control unit 50 determines whether the gesture of the hand of the user acquired in step S15 is a gesture that means releasing the interactive object held by the hand of the user. The gesture that means releasing the interactive object held by the hand of the user is, for example, the state in which the five fingers are opened in the "paper" shape.

In step S15, when the control unit 50 determines that the gesture of the hand of the user acquired in step S15 is the gesture that means releasing the interactive object held by the hand of the user (Y), the processing proceeds to step S17. On the other hand, when the control unit 50 determines that the gesture of the hand of the user is not the gesture that means releasing the interactive object held by the hand of the user (N), the control unit 50 repeatedly executes the determination processing of step S16 until the gesture that means releasing the interactive object is determined.

Next, in step S17, the control unit 50 determines whether there is an available space at a storage location on the target object where an interactive object of the same object type as the interactive object released from the hand of the user is placed.

When the storage location A on the table 2, which is the target object, is defined as the storage location for the driver 2 in the definition information on the driver 2, which is the interactive object, it is determined that there is an available space (Y) since no other driver 2 has been stored at the storage location A and the storage location A is available in the state shown in FIG. 4.

In step S17, when it is determined that there is an available space at the storage location on the target object (Y), the processing proceeds to step S19, and when it is determined that there is no available space at the storage location on the target object (N), the processing proceeds to step S18.

When it is determined that there is an available space (Y) at the defined storage location on the target object, the interactive object is placed at the storage location defined for the interactive object in step S19. In the example shown in FIG. 4, since no other driver 2 has been stored at the storage location A associated with the driver 2 that is the interactive object and there is an available space, the driver 2 released from the hand of the user is placed at the storage location A as shown in FIG. 5. Accordingly, the position of the interactive object can be automatically adjusted to an appropriate position at the target object.

FIG. 6 shows a case where the storage location B on the table 2, which is the target object, is defined as the storage location for a screw 4 in the definition information on the screw 4, which is the interactive object. At the storage location B, a restricted area indicating a range where interactive objects of the same type can be placed is defined, and a predetermined number of interactive objects of the same type are placed in the restricted area such that exclusive bounding boxes thereof do not overlap each other. In the example shown in FIG. 6, the storage location B is set with grid cells G, five in a shown x-direction and five in a shown z-direction, which can store a maximum of twenty-five interactive objects (screws 4) in total. In the example shown in FIG. 6, since no other screw 4 has been stored in any of the grid cells at the storage location B associated with the screw 4 and there is an available space, the screw 4 released from the hand of the user is placed at a grid cell closest to the screw 4 at the time of release as shown in FIG. 6.

On the other hand, when it is determined that there is no available space at the defined storage location on the target object (N), the interactive object is placed at a storage location next to the defined storage location in step S18.

FIG. 7 shows a state in which a second screw 4 is placed adjacent to a grid cell at the storage location B where a first screw 4 is placed as shown in FIG. 6. When the second screw 4 is to be placed in the grid cell where the first screw 4 is placed, the second screw 4 released from the hand of the user is placed in a grid cell at a next storage location as shown in FIG. 7 since there is already a screw 4 stored in the grid cell and there is no available space. Accordingly, it is possible to collectively place objects of the same type, which simulate items that are unnatural to be placed in a dispersed manner one by one, such as small items like screws.

FIG. 8 shows a case where the storage location C on the table 2 that is the target object is defined, in definition information on a wrench 5 that is the interactive object, as a storage location for the wrench 5. In the example shown in FIG. 8, since no other wrench 5 has been stored at the storage location C associated with the wrench 5 that is the interactive object and there is an available space, the wrench 5 released from the hand of the user is placed at the storage location C as shown in FIG. 8.

Next, in step S20, the control unit 50 sets each interactive object placed at each storage location on the target object in steps S18 and S19 to a posture (orientation) according to the storage posture defined the definition information thereof.

In the example shown in FIG. 5, the storage posture of the driver 2, which is the interactive object, is defined in the definition information such that a tip end side faces a minus x-direction (left direction in the drawing), and a tip end of the driver 2 placed at the storage location A faces the minus x-direction according to the definition information on the storage posture. In the example shown in FIG. 7, the storage posture of the screw 4, which is the interactive object, is defined in the definition information such that a tip end side faces a minus y-direction (downward direction in the drawing), and a tip end of each screw 4 placed at the storage location B faces the -y-direction according to the definition information on the storage posture. Further, in the example shown in FIG. 8, the storage posture of the wrench 5, which is the interactive object, is defined in the definition information such that a handle side faces the minus x-direction (left direction in the drawing), and the handle side of the wrench 5 placed at the storage location C faces the minus x-direction according to the definition information on the storage posture.

Next, in step S21, the control unit 50 determines whether the exclusive bounding box of the target object and the exclusive bounding box of the interactive object placed thereon overlap each other. When the exclusive BBs of both objects overlap each other, at least a part of the interactive object displayed in the virtual environment is in a state of being embedded in the target object. Since the user who views such a state through a display screen on the display unit 40 feels a sense of discomfort, a sense of immersion in the virtual environment is impaired. Therefore, it is preferable that the interactive object is placed on the target object in a state in which a part thereof is in contact with or in proximity to the target object instead of being embedded in the target object.

In (a) in FIG. 9, a state is shown in which the driver 2, which is the interactive object, is placed at the storage location on the table 3, which is the target object. In the state shown in (a), the driver 2 is embedded in the upper surface of the table 3 as grasping by the user is released in a state in which a lower side portion of the driver 2 enters below the upper surface of the table 3.

In step S21, when it is determined that the exclusive BB of the target object and the exclusive BB of the interactive object placed thereon overlap each other, the processing proceeds to step S22, and when it is determined that the exclusive BBs of both objects do not overlap each other, the processing ends.

Next, in step S22, the control unit 50 increases, by a predetermined height, a height of the interactive object whose exclusive bounding box is determined to overlap the exclusive bounding box of the target object.

In (b) in FIG. 9, a state is shown in which a height of the driver 2, which is the interactive object placed at the storage location on the table 3 that is the target object, is increased. In step S22, the height of the driver 2, which is the interactive object, is increased by the predetermined height in the y-direction (an upward direction in the drawing). The predetermined height may be, for example, a height corresponding to one pixel of the display unit 40. In FIG. 9, for clarity of illustration, a boundary surface of each bounding box is shown in a state of being separated from outer peripheral surfaces of the interactive object and the target object, but the bounding boxes of the interactive object and the target object may be set such that the boundary surface is in contact with the outer peripheral surfaces thereof.

When the interactive object is raised by the predetermined height in step S22, the processing returns to step S21, and it is determined again whether the exclusive BBs overlap each other. The processing in steps S21 and S22 is repeated until it is determined that the exclusive BB of the target object and the exclusive BB of the interactive object placed thereon do not overlap each other ("N" in step S21), and then the processing ends. When it is determined that the exclusive BB of the target object and the exclusive BB of the interactive object placed thereon do not overlap each other, the interactive object (the driver 2 in the shown example) is displayed as if the interactive object is placed on the upper surface of the target object (the table 3 in the shown example). In other words, the state is not a state in which a part of the interactive object enters the target object nor a state in which the interactive object floats above the target object. Accordingly, even when the interactive object is released at a position where the interactive object interferes as if the interactive object is embedded in another interactive object, the height of the interactive object can be corrected to a height where the interactive object appears to be placed on the target object.

As described above, according to the virtual environment provision apparatus 100 of the embodiment described above, it is possible to provide the user with training to place various tools and components such as drivers at the predetermined storage location in a predetermined order on the table according to the first task training scenario described above executed by the virtual environment provision apparatus 100.

In particular, upon detecting that the user performs an operation of releasing the interactive object in the proximity determination bounding box of the target object based on the operation information, the control unit 50 places the interactive object at the storage location of the target object such that the exclusive bounding box of the interactive object and the exclusive bounding box of another object do not overlap each other in the virtual environment. When the user moves the interactive object in the virtual environment until the exclusive bounding box of the interactive object enters the proximity determination bounding box of the target object, a message prompting release of the grasp on the interactive object and placement of the interactive object on the target object is displayed on the display unit 40, thus the user places various interactive objects on the target object according to the message, and thus it is possible to perform training related to a series of procedures for placing the interactive objects on the target object.

Further, when the user places the interactive object on the target object, the interactive object is automatically placed at the storage location and in the storage posture (orientation) according to the definition information, and thus it is possible to eliminate the need for the user to perform an operation of adjusting the position and the orientation of the interactive object in the virtual environment. In the training for placing the interactive object on the target object, when the purpose is to train the user on the order in which the interactive objects are placed on the target object, the storage location and the storage posture of each interactive object are automatically determined, and thus it is possible to prevent the user from performing positioning or the like which is not essential for the training purpose, and to enhance concentration and the sense of immersion of the user in the training.

Although an example has been described above in which the storage location for the interactive object is defined in advance in the definition information, instead of this, the storage location for the interactive object may not be defined in the definition information, and the control unit 50 may place the interactive object at a storage location closest to the position of the interactive object when the grasp on the interactive object by the user is released.

Depending on whether there is an available space at the storage location where the interactive object of the same object type is placed, the interactive object is placed at the storage location when there is an available space, the interactive object is placed at a next storage location when there is no available space, and thus the interactive object can be automatically adjusted to an appropriate position of the target object.

Although the driver, the wrench, and the screw are shown above as examples of the various tools and components as the interactive objects, various other tools and components such as nuts can be added.

In the example described above, it is described that the control unit 50 includes the processing (steps S21 and S22) of increasing, when the exclusive bounding box of the target object and the exclusive bounding box of the interactive object placed thereon overlap each other, the height of the interactive object until the overlap between the BBs of both objects is resolved. According to this processing, in a case where the interactive object and the target object overlap each other when the interactive object is placed, it is possible to resolve such overlap and eliminate unnaturalness where a part of the interactive object appears to be embedded in the target object.

In the embodiment, when the exclusive bounding box of the target object and the exclusive bounding box of the interactive object placed thereon do not overlap each other, the control unit 50 may set the interactive object to a state in which the interactive object cannot be released. In addition, when the interactive object is set to a state in which the interactive object can be released and the interactive is released in this state, the control unit 50 may perform processing of lowering the height of the interactive object until the BBs of both objects are in proximity to each other. Accordingly, in a case where the interactive object is in a state of floating above the target object when the interactive object is placed, it is possible to automatically adjust the height of the interactive object relative to the target object until the interactive object appears to be placed on the target object.

### [Modifications]

In the embodiment described above, it has been described as an example that each interactive object is grasped individually to perform the operation of movement and placement, and alternatively, a plurality of interactive objects may be moved and placed in units of groups. In this case, for example, the action recognition program 72 may be configured to control the control unit 50 to move each interactive object when it is recognized that two fingers are closed to pinch the interactive object with the two fingers as a grasping operation on the interactive object by the user, and to move a plurality of interactive objects in units of groups when it is recognized that five fingers are closed to hold the interactive objects with the five fingers.

FIG. 10 shows a state in which a total of 15 interactive objects (screws 4) are placed in the restricted area set at the storage location B of the table 3. In the modification, as shown in FIG. 11, when the control unit 50 recognizes that the five fingers are closed to hold the restricted area of the storage location B with the five fingers, in order to notify the user that a group is held, a group highlight GH is displayed around the restricted area, a text message M2 is displayed, or both are displayed, and the user is notified that the plurality of interactive objects are in a state of being movable collectively.

Accordingly, 15 screws 4 placed in the restricted area of the storage location B are collectively grasped by the user as a group, and by maintaining such a grasping state, the screws 4 can be collectively moved to another storage location (for example, the adjacent storage location A). (Second Task Training Scenario)

A second task training scenario relates to training for a task of attaching a label as the interactive object to a front surface of each shelf of a rack that is the target object, and moving, onto a table, the shelf to which the label is attached. When the user operates the operation unit 10 of the virtual environment provision apparatus 100 and selects second task training as the support content to be executed from among the plurality of support contents stored in the support content management database 82, the support content related to the second task training is started in the virtual environment provision apparatus 100. Although the second task training has the interactive object and the target object different from those in the first training, a series of processing executed by the virtual environment provision apparatus 100 is substantially the same as the processing described above with reference to FIG. 2, and thus detailed description of each piece of processing will be omitted.

FIG. 12 shows that labels 1 to 3 as interactive objects are placed on the table and label target positions A to C are set at each shelf of the rack, which is a target device TE as the target object, in the virtual environment.

In the second task training, the labels 1 to 3 are attached to the label target positions A to C set at each shelf by grasping and moving the labels 1 to 3 to the label target positions A to C at each shelf in the virtual environment and releasing the grasp on the labels. An action for attaching the label to each shelf is performed for each label. The shelf to which each label is attached and an order of attaching each label may be determined in advance.

An exclusive bounding box (not shown) is set for each of the labels 1 to 3, and a proximity determination bounding box BB is set in front of the target device (rack) TE. Accordingly, in the second training, as described above with reference to steps S12 and S13 in FIG. 2, it is also determined whether the exclusive BB of each of the labels 1 to 3 enters the proximity determination BB of the target device (rack) TE, and when it is determined that the exclusive BB enters the proximity determination BB, a message prompting release of the grasped label is displayed on the display unit 40 (step S13 in FIG. 2), and when the grasp on the label is released, the label is placed at the label target position of each shelf as shown in FIG. 13 (steps S16 to S20 in FIG. 2).

Thereafter, it is determined whether there is overlap between the exclusive BB of each of the labels 1 to 3 and the exclusive BB of each shelf of the rack TE (step S21 in FIG. 2), and when there is overlap, processing of increasing a height of the label relative to the shelf (in a z-axis direction shown in FIG. 12) until the overlap is resolved is executed (step S22 in FIG. 2).

Accordingly, the control unit 50 establishes association between each label and each shelf to which the label is attached, and when the user pulls out a certain shelf from the rack TE and places the shelf on the table as shown in FIG. 14, the label attached to the shelf is also moved together with the shelf while maintaining a state of being attached to the label target position at the shelf.

In the second task training scenario, as described above, a task of attaching the label as the interactive object to the front surface of each shelf of the rack that is the target object and moving the shelf to which the label is attached onto the table is shown as an example, but a target object of the task is not limited thereto. For example, a task content may be attaching the label as the interactive object to a battery to be replaced that is the target object and moving the battery to which the label is attached.

### (Third Task Training Scenario)

A third task training scenario relates to training for a task of taking, in a predetermined order, various tools and components as interactive objects placed on a table that is the target object and moving the interactive objects to predetermined placement positions at the target object. When the user operates the operation unit 10 of the virtual environment provision apparatus 100 and selects the third task training as the support content to be executed from among the plurality of support contents stored in the support content management database 82, the support content related to the third task training is started in the virtual environment provision apparatus 100.

FIG. 15 is a flowchart showing another example of the operation performed by the virtual environment provision apparatus 100 according to the embodiment. FIG. 16 is a conceptual diagram showing the virtual environment displayed on the display unit 40.

When the support content related to the third task training is started in the virtual environment provision apparatus 100, the control unit 50 reads the definition information on the interactive object and the target object related to the support content of the third task training from the space information management database 81 (step S31). Since the processing in step S31 is the same as the processing in step S11 described with reference to FIG. 2, wherein detailed description thereof will be omitted.

The control unit 50 places each interactive object and the target object read from the space information management database 81 in a three-dimensional virtual environment, and displays the virtual environment on the display unit 40. Initial placement positions of these objects in the virtual environment are determined by, for example, the support content control program 74. The position of the hand and the motion of the finger of the user in the real space of the user are detected by the sensor unit 30 and are further recognized by the action recognition program 72 executed by the control unit 50. When the user holds and moves the interactive object in the virtual environment displayed on the display unit 40, the interactive object is moved in the virtual environment by the support content control program 74 executed by the control unit 50 according to the motion of the hand of the user.

Next, in step S32, the control unit 50 measures a distance between the exclusive bounding box of the interactive object and the proximity determination bounding box of the target object in the virtual environment.

Next, in step S33, the control unit 50 acquires, by the action recognition program 72 executed by the control unit 50, information on the position of the hand and the motion of the finger of the user in the real space detected by the sensor unit 30. In step S15, in particular, information on a gesture of the hand of the user (for example, a state in which five fingers are closed, a state in which two fingers are closed, or a state in which five fingers are opened in a "paper" shape) is acquired. For example, when information on a gesture indicating a state in which five fingers are closed or a state in which two fingers are closed is acquired, the control unit 50 determines that the interactive object close to the position of the hand of the user in the virtual environment is grasped.

Next, in step S34, the control unit 50 determines whether the interactive object grasped in the virtual environment by the user is grasped in a predetermined order defined in the support content.

In step S34, when the control unit 50 determines that the interactive object is not grasped in the predetermined order (N), the processing proceeds to step S35. On the other hand, when the control unit 50 determines that the interactive object is grasped in the predetermined order (Y), the processing proceeds to step S36.

When the control unit 50 determines in step S34 that the interactive object is not grasped in the predetermined order (N), in step S35, the control unit 50 causes the display unit 40 to display a warning message indicating that the grasped interactive object is not a correct interactive object to be grasped in the predetermined order.

FIG. 17 shows a state in which a warning message M3 is displayed on the display unit 40. In the example shown in FIG. 17, among screws 4a and 4b that are the interactive objects in the virtual environment, the support content specifies that the screw 4a is to be held first and then the screw 4b is to be held as a grasping order, but the screw 4b is held first. Therefore, as the warning message M3 indicating that the object is not the correct interactive object, a text message "The held screw is not correct. Please follow the order of attachment." is displayed on the screen of the display unit 40.

Upon receiving the warning message, the user returns the held interactive object to a previous position before it was held by the user (see FIG. 18) and then holds the interactive object (the screw 4a in the above example) to be held in the correct order. Thereafter, the processing returns to step S34, and the processing of steps S34 and S35 is repeated until the interactive object to be grasped in the correct order is grasped.

When the control unit 50 determines that the interactive object is grasped in the predetermined order (Y), in step S36, the control unit 50 causes the display unit 40 to display a confirmation message indicating that the grasped interactive object is the correct interactive object to be grasped in the predetermined order.

FIG. 19 shows a state in which a confirmation message M4 is displayed on the display unit 40. In the example shown in FIG. 19, the screw 4a among the screws 4a and 4b to be held first is held. Therefore, as the confirmation message M4 indicating that the object is the correct interactive object, a text message "The correct screw is held. Please proceed with the task." is displayed on the screen of the display unit 40.

Upon receiving the confirmation message, the user moves the held interactive object to the predetermined storage location of the target object and releases the grasp on the interactive object at the storage location.

Next, in step S37, the control unit 50 determines whether the action of releasing the grasp on the interactive object performed in step S36 is performed in the proximity determination bounding box of the target object by the interactive object.

When the interactive object is located in the proximity determination BB of the target object and a state in which, for example, five fingers are opened in a "paper" shape is acquired as the information on the gesture of the hand of the user, the control unit 50 determines that the interactive object is released in the proximity determination BB of the target object (Y), and the processing proceeds to step S38.

On the other hand, when the above condition is not satisfied, the control unit 50 determines that the interactive object is not released in the proximity determination BB of the target object (N), the processing returns to step S36, and the processing of steps S36 and S37 is repeated until it is determined that the interactive object is released in the proximity determination BB of the target object (Y).

When it is determined in step S37 that the interactive object is released in the proximity determination BB of the target object (Y), the control unit 50 then performs processing of placing the interactive object where the grasp is released, for example, at a storage location closest to a position of the interactive object when being released among storage locations of the target object (step S38), next, a storage location next to the storage location where the interactive object is placed in step S38 among the storage locations of the target object is assigned as a storage location for the interactive object to be grasped and moved next (step S39), and the processing ends.

In this example, as shown in FIG. 19 and the like, a restricted area indicating a range where interactive objects of the same type can be placed is defined at the storage location B for the screws 4A and 4b, and a predetermined number of interactive objects of the same type are placed in the restricted area such that exclusive bounding boxes thereof do not overlap each other. In step S39, another location in the restricted area of the storage location B is assigned as the storage location for the next interactive object (screw) after the placed interactive object (screw).

In the second task training scenario, the task of taking, in the predetermined order, the various tools and components as the interactive objects placed on the table that is the target object and moving the interactive objects to the predetermined placement positions at the target object has been described as an example, but a target object of the task is not limited thereto. For example, the task content may be first removing the screw as the interactive object attached to a battery that is the target object and reattaching the screw to an original position.

As described above with reference to several training scenarios according to the embodiment, according to an aspect of the disclosure, provided is a virtual environment provision apparatus that controls placement of a virtual object in a three-dimensional virtual environment, the virtual environment provision apparatus including: a storage unit; a control unit; a sensor unit; and a display unit, in which the storage unit stores a database, the database defining an interactive object movable by a user in a virtual environment, a target object serving as a placement destination for the interactive object, a storage location where the interactive object is placed on the target object, exclusive bounding boxes representing virtual boundaries of the interactive object and the target object that do not allow overlapping with each other, and a proximity determination bounding box for determining that the interactive object is in proximity to the target object, the sensor unit acquires operation information on an operation performed on an object by the user, upon detecting that the user performs an operation of releasing the interactive object in the proximity determination bounding box of the target object based on the operation information, the control unit places the interactive object at the storage location of the target object such that an exclusive bounding box of the interactive object and an exclusive bounding box of another object do not overlap each other in the virtual environment, and the display unit displays the target object and the interactive object in the virtual environment.

According to the virtual environment provision apparatus of the disclosure implemented in this way, since the interactive object and the target object are defined and relative placement of the interactive object with respect to the target object is adjusted based on a mutual positional relationship therebetween, it is possible to appropriately place the object operated by the user in the virtual environment in which there are the object moved by the user and the object that does not move.

The virtual environment provision apparatus of the disclosure may further be implemented such that a plurality of the storage locations are defined on the target object, and when the interactive object is released in the proximity determination bounding box of the target object, the control unit places the interactive object at a storage location where no other interactive object is placed on the target object. Accordingly, the position of the interactive object can be automatically adjusted to an appropriate position at the target object.

The virtual environment provision apparatus of the disclosure may further be implemented such that a type is defined for the interactive object, a restricted area indicating a range where the interactive object is placeable is defined at the storage location, and when the interactive object is released in the proximity determination bounding box of the target object, the control unit places the interactive object in the restricted area of the storage location where an interactive object of the same type as the interactive object is placed such that exclusive bounding boxes thereof do not overlap each other. Accordingly, it is possible to collectively place objects, which simulate items that are unnatural to be placed in a dispersed manner one by one, such as screws.

The virtual environment provision apparatus of the disclosure may further be implemented such that the control unit causes the display unit to display notification information for notifying the user that the interactive object enters the proximity determination bounding box of the target object. Accordingly, it is possible to notify the user that the interactive object can be placed on the target object, and support the operation.

The virtual environment provision apparatus of the disclosure may further be implemented such that the interactive object includes a virtual object of a screw and a virtual object of a screwdriver, and the target object includes a virtual object of a table where the screw and the screw driver are placeable.

The virtual environment provision apparatus of the disclosure may further be implemented such that, upon detecting that the user performs a predetermined grasping operation at a placement position where a plurality of the interactive objects are placed in the restricted area based on the operation information, the control unit brings the plurality of interactive objects into a state of being movable collectively as a group in the virtual environment, and may further be implemented such that, upon detecting that the user performs an operation of releasing the group of the plurality of interactive objects in the proximity determination bounding box of the target object based on the operation information, the control unit places the plurality of interactive objects in a restricted area of a closest storage location. Accordingly, it is possible to collectively operate the plurality of interactive objects that are collectively placed.

The virtual environment provision apparatus of the disclosure may further be implemented such that, upon detecting that the user performs the predetermined grasping operation at the placement position where the plurality of interactive objects are placed in the restricted area based on the operation information, the control unit causes the display unit to display notification information notifying that the plurality of interactive objects are movable collectively as a group in the virtual environment. Accordingly, it is possible to notify the user that the plurality of interactive objects can be collectively moved, and support the operation.

The virtual environment provision apparatus of the disclosure may further be implemented such that, in a case where the exclusive bounding box of the interactive object and the exclusive bounding box of the target object overlap each other when the control unit detects that the user performs the operation of releasing the interactive object in the proximity determination bounding box of the target object, the control unit increases a height of the interactive object relative to the target object until the overlap is resolved. Accordingly, even when the interactive object is released at a position where the interactive object interferes as if the interactive object is embedded in another interactive object, the height of the interactive object can be corrected to a height where the interactive object appears to be placed on the target object.

According to another aspect of the disclosure, provided is a method for controlling placement of a virtual object in a three-dimensional virtual environment, the method being executed by a virtual environment provision apparatus that includes a storage unit, a control unit, a sensor unit, and a display unit, in which the storage unit stores a database, the database defining an interactive object movable by a user in a virtual environment, a target object serving as a placement destination for the interactive object, a storage location where the interactive object is placed on the target object, exclusive bounding boxes representing virtual boundaries of the interactive object and the target object that do not allow overlapping with each other, and a proximity determination bounding box for determining that the interactive object is in proximity to the target object, the sensor unit is configured to acquire operation information on an operation performed on an object by the user, the display unit is configured to display the target object and the interactive object in the virtual environment, and the method includes: the control unit placing, upon detecting that the user performs an operation of releasing the interactive object in the proximity determination bounding box of the target object based on the operation information, the interactive object at the storage location of the target object such that an exclusive bounding box of the interactive object and an exclusive bounding box of another object do not overlap each other in the virtual environment.

According to still another aspect of the disclosure, provided is a program for causing a computer that includes a storage unit, a control unit, a sensor unit, and a display unit to execute placement control of a virtual object in a three-dimensional virtual environment, in which the storage unit stores a database, the database defining an interactive object movable by a user in a virtual environment, a target object serving as a placement destination for the interactive object, a storage location where the interactive object is placed on the target object, exclusive bounding boxes representing virtual boundaries of the interactive object and the target object that do not allow overlapping with each other, and a proximity determination bounding box for determining that the interactive object is in proximity to the target object, the sensor unit is configured to acquire operation information on an operation performed on an object by the user, the display unit is configured to display the target object and the interactive object in the virtual environment, and the program causes the control unit to place, upon detecting that the user performs an operation of releasing the interactive object in the proximity determination bounding box of the target object based on the operation information, the interactive object at the storage location of the target object such that an exclusive bounding box of the interactive object and an exclusive bounding box of another object do not overlap each other in the virtual environment.

The above embodiment of the invention is an example for describing the invention, and is not intended to limit the scope of the invention only to the embodiment. Those skilled in the art can implement the invention in various other aspects without departing from the scope of the invention.

### Reference Signs List

- 100: virtual environment provision apparatus
- 10: operation unit
- 20: communication unit
- 30: sensor unit
- 40: display unit
- 50: control unit
- 60: output unit
- 70: memory
- 80: storage

## Claims

1. A virtual environment provision apparatus that controls placement of a virtual object in a three-dimensional virtual environment, the virtual environment provision apparatus comprising:
a storage unit;
a control unit;
a sensor unit; and
a display unit, wherein
the storage unit stores a database, the database defining an interactive object movable by a user in a virtual environment, a target object serving as a placement destination for the interactive object, a storage location where the interactive object is placed on the target object, exclusive bounding boxes representing virtual boundaries of the interactive object and the target object that do not allow overlapping with each other, and a proximity determination bounding box for determining that the interactive object is in proximity to the target object,
the sensor unit acquires operation information on an operation performed on an object by the user,
upon detecting that the user performs an operation of releasing the interactive object in the proximity determination bounding box of the target object based on the operation information, the control unit places the interactive object at the storage location of the target object such that an exclusive bounding box of the interactive object and an exclusive bounding box of another object do not overlap each other in the virtual environment, and
the display unit displays the target object and the interactive object in the virtual environment.

2. The virtual environment provision apparatus according to claim 1, wherein
a plurality of the storage locations are defined on the target object, and
when the interactive object is released in the proximity determination bounding box of the target object, the control unit places the interactive object at a storage location where no other interactive object is placed on the target object.

3. The virtual environment provision apparatus according to claim 1, wherein
a type is defined for the interactive object,
a restricted area indicating a range where the interactive object is placeable is defined at the storage location, and
when the interactive object is released in the proximity determination bounding box of the target object, the control unit places the interactive object in the restricted area of the storage location where an interactive object of the same type as the interactive object is placed such that exclusive bounding boxes thereof do not overlap each other.

4. The virtual environment provision apparatus according to claim 1, wherein
the control unit causes the display unit to display notification information for notifying the user that the interactive object enters the proximity determination bounding box of the target object.

5. The virtual environment provision apparatus according to claim 1, wherein
the interactive object includes a virtual object of a screw and a virtual object of a screwdriver, and
the target object includes a virtual object of a table where the screw and the screw driver are placeable.

6. The virtual environment provision apparatus according to claim 3, wherein
upon detecting that the user performs a predetermined grasping operation at a placement position where a plurality of the interactive objects are placed in the restricted area based on the operation information, the control unit brings the plurality of interactive objects into a state of being movable collectively as a group in the virtual environment.

7. The virtual environment provision apparatus according to claim 6, wherein
upon detecting that the user performs an operation of releasing the group of the plurality of interactive objects in the proximity determination bounding box of the target object based on the operation information, the control unit places the plurality of interactive objects in a restricted area of a closest storage location.

8. The virtual environment provision apparatus according to claim 6, wherein
upon detecting that the user performs the predetermined grasping operation at the placement position where the plurality of interactive objects are placed in the restricted area based on the operation information, the control unit causes the display unit to display notification information notifying that the plurality of interactive objects are movable collectively as a group in the virtual environment.

9. The virtual environment provision apparatus according to claim 1, wherein
in a case where the exclusive bounding box of the interactive object and the exclusive bounding box of the target object overlap each other when the control unit detects that the user performs the operation of releasing the interactive object in the proximity determination bounding box of the target object, the control unit increases a height of the interactive object relative to the target object until the overlap is resolved.

10. A method for controlling placement of a virtual object in a three-dimensional virtual environment, the method being executed by a virtual environment provision apparatus that includes a storage unit, a control unit, a sensor unit, and a display unit, wherein
the storage unit stores a database, the database defining an interactive object movable by a user in a virtual environment, a target object serving as a placement destination for the interactive object, a storage location where the interactive object is placed on the target object, exclusive bounding boxes representing virtual boundaries of the interactive object and the target object that do not allow overlapping with each other, and a proximity determination bounding box for determining that the interactive object is in proximity to the target object,
the sensor unit is configured to acquire operation information on an operation performed on an object by the user,
the display unit is configured to display the target object and the interactive object in the virtual environment, and
the method comprises:
the control unit placing, upon detecting that the user performs an operation of releasing the interactive object in the proximity determination bounding box of the target object based on the operation information, the interactive object at the storage location of the target object such that an exclusive bounding box of the interactive object and an exclusive bounding box of another object do not overlap each other in the virtual environment.

11. (Program claim equivalent to claim 1)
A program for causing a computer that includes a storage unit, a control unit, a sensor unit, and a display unit to execute placement control of a virtual object in a three-dimensional virtual environment, wherein
the storage unit stores a database, the database defining an interactive object movable by a user in a virtual environment, a target object serving as a placement destination for the interactive object, a storage location where the interactive object is placed on the target object, exclusive bounding boxes representing virtual boundaries of the interactive object and the target object that do not allow overlapping with each other, and a proximity determination bounding box for determining that the interactive object is in proximity to the target object,
the sensor unit is configured to acquire operation information on an operation performed on an object by the user,
the display unit is configured to display the target object and the interactive object in the virtual environment, and
the program causes the control unit to place, upon detecting that the user performs an operation of releasing the interactive object in the proximity determination bounding box of the target object based on the operation information, the interactive object at the storage location of the target object such that an exclusive bounding box of the interactive object and an exclusive bounding box of another object do not overlap each other in the virtual environment.
